# EUROPÄISCHE PATENTSCHRIFT

(11) **EP 1 381 655 B1**
(45) Veröffentlichungstag und Bekanntmachung des Hinweises auf die Patenterteilung: **20.10.2004**
(21) Anmeldenummer: 02735220.2
(22) Anmeldetag: 03.04.2002
(51) Int. Cl.: C09K 3/18

(54) **ENTEISUNGSMITTEL UND VERFAHREN ZUM SCHMELZEN VON SCHNEE UND EIS**
DEFROSTING AGENT AND METHOD FOR MELTING SNOW AND ICE
DEGIVREUR ET PROCEDE PERMETTANT DE FAIRE FONDRE LA NEIGE ET LA GLACE

(30) Priorität: 14.04.2001 DE 10118685
(43) Veröffentlichungstag der Anmeldung: 21.01.2004
(73) Patentinhaber: Clariant GmbH, 65929 Frankfurt am Main (DE)
(72) Erfinder: DIETL, Harald, Artur, 84556 Kastl (DE)
(74) Vertreter: Mikulecky, Klaus
(86) Internationale Anmeldenummer: PCT/EP2002/003698
(87) Internationale Veröffentlichungsnummer: WO 2002/086010

(56) Entgegenhaltungen:
- EP-A- 0 992 562
- DE-A- 4 034 217
- US-A- 4 954 279
- US-A- 5 435 930
- US-A- 6 059 989
- US-A- 6 149 833
- US-A- 6 156 226

## Beschreibung

Die vorliegende Erfindung betrifft ein Verfahren zum Schmelzen von Schnee und/oder Eis auf Verkehrsflächen durch Aufbringen eines Enteisungsmittels aus einer wässrigen Lösung aus Alkalimetallcarboxylat, Tensid und Entschäumer, sowie dieses Enteisungsmittel.

Schnee und/oder Eis auf Straßen, Radfahrwegen, Gehwegen, Brücken, Sportplätzen, Flugplätzen und dergleichen, im folgenden Verkehrsflächen genannt, führen zu einer wesentlichen Beeinträchtigung des Verkehrsablaufs und der Verkehrssicherheit. Es ist deshalb schon seit langem bekannt, auf solche Flächen wasserlösliche Salze aufzubringen, wobei Eis und Schnee schmilzt (auftaut) und eine wässrige Lösung des Salzes mit entsprechend erniedrigtem Gefrierpunkt gebildet wird oder wobei das Gefrieren von Niederschlag ob nun als Regen oder Schnee oder auch nur als gefrierender Nebel durch die wässrige Lösung aus Alkalimetallcarboxylaten verhindert oder verzögert wird.

Wenn Salze als Enteisungsmittel eingesetzt werden, sollten vor allem die folgenden Forderungen erfüllt sein: Das Salz sollte das Material, aus dem die erwähnten Flächen aufgebaut sind, zum Beispiel Beton nach DIN 18500, weniger beschädigen oder nicht beschädigen oder gar zersetzen als bisherige Taumittel. Das eingesetzte Salz sollte eine schnelle und möglichst weitgehende Auftauung bewirken und/oder bei gefrierendem Niederschlag eine Vereisung der Verkehrsflächen verhindern. Von der wirtschaftlichen Seite her ist es schließlich notwendig, dass das Taumittel eine sehr gute Tauleistung und eine lange Vereisungsschutzzeit bietet.

Im Hinblick auf die erwähnten Forderungen werden im Stand der Technik vor allem Alkalimetall- und Erdalkalimetallchloride sowie Alkalimetall- und Erdalkalimetallsalze von organischen Säuren als vorteilhafte Enteisungsmittel genannt. So werden in US-4 855 071 und EP-A-0 579 014 Alkalimetall- und/oder Erdalkafimetallcarboxylate mit 1 bis 4 C-Atomen, hergestellt nach einem bestimmten Verfahren, als Enteisungsmittel beschrieben, wobei im wesentlichen Calcium/Magnesiumacetat oder Natriumacetat besonders empfohlen wird.

In EP-A-0 483 721 wird ein flüssiges Enteisungsmittel beschrieben, das im wesentlichen aus Wasser, einem Alkalimetall- und/oder Erdalkalimetallacetat und speziellen Korrosionsinhibitoren besteht.

Darüber hinaus werden in US-5 376 293 auch Mischungen aus verschiedenen Alkalimetall- und Erdalkalimetallcarboxylaten mit einer Kohlenstoffkettenlänge von C₁ bis C₃ beschrieben.

In US-A-5 435 930 wird ein Enteisungsmittel beschrieben, welches 55% Kaliumacetat, Octylphenoxypolyethoxyethylphosphat als Tensid und Phosphorsäure und Natriumsilikat als Korrosionsinhibitoren enthält.

In US-A-4 954 279 wird die Verwendung von Entschäumern in Enteisungsmitteln in Kombination mit Tensiden beschrieben.

Die bekannten Enteisungsmittel auf der Basis von Alkalimetallchloriden oder Erdalkalimetallchloriden und auf der Basis von Alkalimetall- und/oder Erdalkalimetallcarboxylaten erfüllen die Anforderungen an ein Enteisungsmittel nur in ungenügender Art und Weise.

Die Wirkung eines Salzes als Enteisungsmittel beruht, wie eingangs bereits erwähnt, auf der Gefrierpunktserniedrigung von Wasser durch die gelösten Kationen und Anionen und der Anzahl der gelösten Teilchen pro Volumeneinheit. Darüber hinaus ist jedoch auch für die Penetrationsgeschwindigkeit und die Tau- oder Schmelzkapazität oder Vereisungsschutzzeit eines Taumittels die Art und Weise der Benetzung der zu enteisenden Oberfläche von entscheidender Bedeutung. Daraus resultiert nicht nur eine Beschleunigung des Tau- oder Schmelzvorganges beim Tauen und/oder Schmelzen von Eis und/oder Schnee, sondern auch eine Reduzierung der Taumittelmenge beim Tauen und/oder Schmelzen von Eis und/oder Schnee. Weiterhin sollte sich ein besseres flüssiges Taumittel, als die bereits oben beschriebenen Taumittel dadurch auszeichnen, dass der flüssige Taustoff frei von festen Bestandteilen ist und dass dieser sowohl bei Temperaturen unter 0°C als auch bei Temperaturen über dem Gefrierpunkt lagerstabil ist.

Die Aufgabe der Erfindung liegt demnach darin, aus der Vielzahl der Enteisungsmittel in Form von Alkalimetall- und/oder Erdalkalimetallchloriden sowie Alkalimetall- und/oder Erdalkalimetallcarboxylaten ein solches zu entwickeln, das eine hohe Wirkung bezüglich Gefrierpunktserniedrigung aufweist und beim Vorgang des Vereisens durch gefrierenden Niederschlag in Form von Schnee, Regen oder gefrierenden Nebels oder Taues längere Gefrierschutzzeit bietet als vergleichbare Taumittel. Dieses flüssige Enteisungsmittel sollte ferner insbesondere stabil gegen Entmischung der Einzelkomponenten sein. Das Enteisungsmittel sollte ferner insbesondere ökologisch und physiologisch unbedenklich sein, keine oder nur geringfügig korrodierende Wirkung auf Metalle und den Belag der Verkehrsflächen ausüben und biologisch gut verträglich sowie gut handhabbar und lagerfähig sein. Ein solches Enteisungsmittel wäre vor allem in all den Fällen erwünscht, in denen es auf langanhaltenden Vereisungsschutz und auf ein schnelles und auch anhaltendes Auftauen von Eis und/oder Schnee der Umgebung ankommt.

Es wurde überraschenderweise festgestellt, dass eine bestimmte wässrige Lösung aus Alkalimetallcarboxylat in Kombination mit einem Tensid und Entschäumer und einem geeigneten Korrosionsinhibitor in geringen Mengen, und zwar eine spezielle wässrige Lösung aus dem Kaliumsalz der Ameisensäure und einem geeigneten Tensid und Entschäumer und Korrosionsinhibitor in geringen Mengen, all die geforderten Eigenschaften bei der Anwendung als Enteisungsmittel aufweist.

Gegenstand der Erfindung ist daher ein Enteisungsmittel, enthaltend
a) 51 bis 70 Gew.-% eines Alkalimetallcarboxylats,
b) 0,001 bis 1 Gew.-% eines Alkylpolyglycosids als Tensids,
c) 0,0001 bis 1 Gew.-% eines Entschäumers und
d) 0,001 bis 1 Gew.-% eines Korrosionsinhibitors
sowie Wasser ad 100 Gew.-%.

Ein weiterer Gegenstand der Erfindung ist ein Verfahren zum Schmelzen von Schnee und Eis auf Verkehrsflächen, indem man 5 bis 100 g/m² des erfindungsgemäßen Enteisungsmittels auf die Verkehrsfläche aufbringt.

Die aufzubringende Menge an Enteisungsmittel hängt vor allem von der Außentemperatur und der vorhandenen Eis- und/oder Schneemenge ab und liegt vorzugsweise bei 15 bis 80 g/m² Verkehrsfläche. Das Aufbringen des Enteisungsmittels kann mit den üblichen Streufahrzeugen durchgeführt werden.

Das erfindungsgemäße Enteisungsmittel enthält vorzugsweise ein Alkalimetallformiat, insbesondere Kaliumformiat. Die Menge des Bestandteils a) liegt vorzugsweise zwischen 52 und 60 Gew.-%, insbesondere zwischen 54 und 56 Gew.-%.

Das erfindungsgemäße Enteisungsmittel enthält 0,01 bis 0,5 Gew.-%, insbesondere 0,02 bis 0,2 Gew.-% eines oder mehrerer Tenside. Als werden Tenside Alkyl(poly)glycoside verwendet. Deren Alkylgruppen umfassen vorzugsweise 8 bis 16 Kohlenstoffatome.

Das erfindungsgemäße Enteisungsmittel enthält 0,0002 bis 0,1 Gew.-%, insbesondere 0,0005 bis 0,01 Gew.-% eines oder mehrerer Entschäumer. Als Entschäumer werden vorzugsweise Polysiloxane, insbesondere Polydialkylsiloxane, speziell Polydimethylsiloxane verwendet.

Das erfindungsgemäße Enteisungsmittel enthält 0,01 bis 0,7 Gew.-% eines oder mehrerer Korrosionsinhibitoren. Als Korrosionsinhibitor werden vorzugsweise Alkaliphosphate, -borate und -silikate verwendet.

### Beispiele

Die Bestimmung der Vereisungsschutzzeit wurde analog zu AMS bei der jeweils angegebenen Luft- und Betonplattentemperatur durchgeführt. Hierbei wurden jedoch keine elektropolierten Aluminiumbahnen zum Vereisen verwendet, sondern Betonplatten mit den Maßen 25 cm x 25 cm x 5 cm und einem Neigungswinkel von 1°. Auf die Platten wurden 1,875 g des angegebenen Enteisungsmittels aufgebracht, was einer Aufbringmenge von 30 g Enteiser /m² entspricht. Als Maß für die Vereisungsschutzzeit dient die Zeitspanne bis zum Start der Vereisung der Betonplatte.

**Tabelle 1:**

| Wirksamkeit von Enteisungsmitteln (V = Vergleichsbeispiel) | | | | |
|---|---|---|---|---|
| Beispiel | Temperatur °C | Enteiser | Beregnungsrate g/(dm²·h) | Vereisungsschutzzeit min |
| 1 | - 5 | E | 5,7 | 28 |
| 2 | - 5 | E | 7,5 | 22 |
| 3 | - 5 | E | 8,4 | 17 |
| 4 | - 15 | E | 8,4 | 15 |
| 5 | - 15 | E | 8,7 | 16 |
| 6 | - 15 | E | 9,2 | 11,5 |
| 7 (V) | - 5 | Kaliumformiat | 5,5 | 22 |
| 8 (V) | - 5 | Kaliumformiat | 7,6 | 12 |
| 9 (V) | - 15 | Kaliumformiat | 8,4 | 10 |
| 10 (V) | - 15 | Kaliumformiat | 8,7 | 16 |
| 11 (V) | - 15 | Kaliumformiat | 9,2 | 11,5 |
| 12 (V) | - 15 | Kaliumacetat | 8,5 | 15 |
| 13 (V) | - 15 | Kaliumacetat | 8,9 | 7,5 |
| E = erfindungsgemäßes Enteisungsmittel, bestehend aus einer 56 gew.-%igen wässrigen Lösung aus Kaliumformiat mit 0,1 Gew.-% C₈- bis C₁₆-Alkylglycosid, 0,005 Gew.-% Polydimethylsiloxan und 0.6 Gew.-% einer Mischung aus K₃PO₄ und Na₂SiO₃. | | | | |

## Patentansprüche

1. Enteisungsmittel, enthaltend
a) 51 bis 70 Gew.-% eines Alkalimetallcarboxylats,
b) 0,001 bis 1 Gew.-% eines Alkyl(poly)glycosids,
c) 0,0001 bis 1 Gew.-% eines Entschäumers, und
d) 0,001 bis 1 Gew.-% eines Korrosionsinhibitors
sowie Wasser ad 100 Gew.-%.

2. Enteisungsmittel gemäß Anspruch 1, worin die Menge des Bestandteils a) zwischen 52 und 60 Gew.-% liegt.

3. Enteisungsmittel gemäß Anspruch 1 und/oder 2, worin die Menge des Bestandteils a) zwischen 54, und 56 Gew.-% liegt.

4. Enteisungsmittel gemäß einem oder mehreren der Ansprüche 1 bis 3, worin Bestandteil a) ein Alkalimetallformiat ist.

5. Enteisungsmittel gemäß Anspruch 4, worin Bestandteil a) Kaliumformiat ist.

6. Enteisungsmittel gemäß einem oder mehreren der Ansprüche 1 bis 5, worin die Menge des Bestandteils b) zwischen 0,01 bis 0,5 Gew.-% liegt.

7. Enteisungsmittel gemäß einem oder mehreren der Ansprüche 1 bis 6, worin die Menge des Bestandteils c) zwischen 0,0002 bis 0,1 Gew.-% liegt.

8. Enteisungsmittel gemäß einem oder mehreren der Ansprüche 1 bis 7, worin Bestandteil c) ein Polysiloxan ist.

9. Enteisungsmittel gemäß einem oder mehreren der Ansprüche 1 bis 8, worin die Menge des Bestandteils d) zwischen 0,01 bis 0,7 Gew.-% liegt.

10. Enteisungsmittel gemäß einem oder mehreren der Ansprüche 1 bis 9, worin Bestandteil c) ein Alkaliphosphat, -borat und/oder -silikat ist.

11. Verfahren zum Schmelzen von Schnee und Eis auf Verkehrsflächen, indem man 5 bis 100 g/m² des Enteisungsmittels gemäß einem oder mehreren der Ansprüche 1 bis 9 auf die Verkehrsfläche aufbringt.

## Claims

1. A deicing composition containing
a) from 51 to 70% by weight of an alkali metal carboxylate,
b) from 0.001 to 1% by weight of an alkyl (poly)glycoside,
c) from 0.0001 to 1 % by weight of a defoamer, and
d) from 0.001 to 1% by weight of a corrosion inhibitor
and also water to 100% by weight.

2. The deicing composition as claimed in claim 1, wherein the amount of constituent a) is between 52 and 60% by weight.

3. The deicing composition as claimed in claim 1 and/or 2, wherein the amount of constituent a) is between 54 and 56% by weight.

4. The deicing composition as claimed in one or more of claims 1 to 3, wherein constituent a) is an alkali metal formate.

5. The deicing composition as claimed in claim 4, wherein constituent a) is potassium formate.

6. The deicing composition as claimed in one or more of claims 1 to 5, wherein the amount of constituent b) is between 0.01 to 0.5% by weight.

7. The deicing composition as claimed in one or more of claims 1 to 6, wherein the amount of constituent c) is between 0.0002 to 0.1% by weight.

8. The deicing composition as claimed in one or more of claims 1 to 7, wherein constituent c) is a polysiloxane.

9. The deicing composition as claimed in one or more of claims 1 to 8, wherein the amount of constituent d) is between 0.01 to 0.7% by weight.

10. The deicing composition as claimed in one or more of claims 1 to 9, wherein constituent c) is an alkali metal phosphate, alkali metal borate and/or alkali metal silicate.

11. A method of melting snow and ice on traffic areas by applying from 5 to 100 g/m² of the deicing composition as claimed in one or more of claims 1 to 9 to the traffic area.

## Revendications

1. Agent de dégivrage, contenant
a) de 51 à 70% en poids d'un carboxylate de métal alcalin,
b) de 0,001 à 1% en poids d'un alkyl(poly)glucoside,
c) de 0,0001 à 1% en poids d'un agent anti-mousse et
d) de 0,001 à 1% en poids d'un agent inhibiteur de la corrosion,
ainsi que de l'eau en complément à 100%.

2. Agent de dégivrage selon la revendication 1, où la quantité du constituant a) se situe entre 52 et 60% en poids.

3. Agent de dégivrage selon la revendication 1 et/ou 2, où la quantité du constituant a) se situe entre 54 et 56% en poids.

4. Agent de dégivrage selon une ou plusieurs des revendications 1 à 3, où le constituant a) est un formiate de métal alcalin.

5. Agent de dégivrage selon la revendication 4, où le constituant a) est le formiate de potassium.

6. Agent de dégivrage selon une ou plusieurs des revendications 1 à 5, où la quantité du constituarit b) se situe entre 0,01 et 0,5% en poids.

7. Agent de dégivrage selon une ou plusieurs des revendications 1 à 6, où la quantité du constituant c) se situe entre 0,0002 et 0,1% en poids.

8. Agent de dégivrage selon une ou plusieurs des revendications 1 à 7, où le constituant c) est un polysiloxane.

9. Agent de dégivrage selon une ou plusieurs des revendications 1 à 8, où la quantité du constituant d) se situe entre 0,01 et 0,7% en poids.

10. Agent de dégivrage selon une ou plusieurs des revendications 1 à 9, où le constituant c) est un phosphate, un borate et/ou un silicate alcalin.

11. Procédé en vue de la fusion de neige et de glace sur des surfaces de circulation, au cours duquel on applique sur la surface de circulation, de 5 à 100 g/m2 de l'agent de dégivrage selon une ou plusieurs des revendications 1 à 9.
